Europäisches Patentamt

European Patent Office

Office européen des brevets

(11) Publication number: **0 284 287 B1**

# EUROPEAN PATENT SPECIFICATION

(45) Date of publication of patent specification: **24.11.93**   (51) Int. Cl.[5]: **C08F 10/00**, C08F 4/64

(21) Application number: **88302299.8**

(22) Date of filing: **16.03.88**

(54) **A process for producing alpha-olefin polymers.**

(30) Priority: **26.03.87 JP 72828/87**

(43) Date of publication of application:
**28.09.88 Bulletin 88/39**

(45) Publication of the grant of the patent:
**24.11.93 Bulletin 93/47**

(84) Designated Contracting States:
**DE FR GB**

(56) References cited:
**FR-A- 2 510 122**
**US-A- 3 328 375**
**US-A- 3 362 916**

(73) Proprietor: **Chisso Corporation**
**6-32, Nakanoshima 3-chome**
**Kita-ku**
**Osaka-shi Osaka-fu(JP)**

(72) Inventor: **Masuda, Jun**
**15-14, Nagauraekimae 4-chome**
**Sodegauracho**
**Kimitsugun Chibaken(JP)**
Inventor: **Shiraishi, Takeshi**
**27-2, Tatsumidai Higashi 3-chome**
**Ichiharashi Chibaken(JP)**
Inventor: **Komori, Nobutoshi**
**1705, Murakami**
**Ichiharashi Chibaken(JP)**
Inventor: **Uwai, Toshihiro**
**17, Tatsumidai Higashi 2-chome**
**Ichiharashi Chibaken(JP)**

(74) Representative: **Lamb, John Baxter et al**
**MARKS & CLERK**
**57-60 Lincoln's Inn Fields**
**London WC2A 3LS (GB)**

## Description

This invention relates to a process for producing $\alpha$-olefin polymers. More particularly it relates to a process for producing highly crystalline $\alpha$-olefin polymers having a good particulate form with a high yield, using a specified catalyst.

It has been well known that $\alpha$-olefins polymerize in the presence of the so-called Ziegler-Natta catalyst consisting of a compound of transition metals of groups IV to VI of the Periodic Table and an organometal compound of metals of groups I to III thereof, including modified catalysts obtained by adding an electron donor or the like to the above two compounds. Above all, in order to obtain highly crystalline polymers of propylene, butene-1, etc., titanium trichloride has been most broadly used. The titanium trichloride is classified into those of the following three kinds depending on its preparation:

① a substance obtained by reducing $TiCl_4$ with hydrogen, followed by grinding the resulting material with a ball mill for activation (which has been referred to as (HA));

② a substance obtained by reducing $TiCl_4$ with metal aluminum, followed by grinding the resulting material with a ball mill and having a formula $TiCl_3 \cdot {}^1/_3 AlCl_3$ (the so-called titanium trichloride (AA)); and

③ a substance obtained by reducing $TiCl_4$ with an organoaluminum compound, followed by heat treatment.

However, any of these kinds of titanium trichloride have not been fully satisfactory; hence various improvements have been attempted. Among the above kinds, the above substance of type ③ affords a polymer having a good form; hence various processes for producing it have been considered. As one of the processes, a process has been proposed which comprises reducing $TiCl_4$ with an organoaluminum compound, followed by treating the resulting titanium trichloride with an electron donor and $TiCl_4$ to thereby enhance the catalyst activity and also reducing the quantity of amorphous polymers formed (e.g. Japanese patent publication No. Sho 53-3356/1978). However, even according to this process, improvements in the catalyst activity and crystallinity have been insufficient.

On the other hand, the present applicants have filed, as a process having improved the above-mentioned production process, a process for producing $\alpha$-olefin polymers which comprises polymerizing $\alpha$-olefins in the presence of a catalyst obtained by reacting an organoaluminum compound with an electron donor, followed by reacting the resulting reaction product with $TiCl_4$, reacting the resulting solids with an electron donor and an electron acceptor and combining the resulting solid product with an organoaluminum compound (Japanese patent application laid-open No. Sho 56-110707/1981), and a process for producing $\alpha$-olefin polymers which comprises polymerizing $\alpha$-olefins in the presence of a catalyst obtained by reacting a reaction product of an organoaluminum compound with an electron donor, with $TiCl_4$, followed by subjecting the resulting solids to polymerization treatment with an $\alpha$-olefin, reacting the resulting material with an electron donor and an electron acceptor and combining the resulting solid product with an organoaluminum compound (Japanese patent application laid-open No. Sho 58-17104/1983). According to these two processes (hereinafter referred to often as previous inventions), improvements in the storage stability, polymerization activity, crystallinity, etc. of used catalysts to a large extent have been observed, but further improvements have been desired.

Further, a process has also been known for producing crystalline polymers of propylene or the like using the so-called supported type Ziegler catalyst entirely different from the above titanium trichloride composition which catalyst is obtained by mainly having $TiCl_4$ supported on a magnesium compound.

These supported type Ziegler catalysts have a higher polymerization activity per unit weight of Ti than those according to the process using titanium trichloride, but they are practically insufficient in the aspect of crystallinity of the resulting polymer; hence improvements have also been attempted in this aspect. For example, there are processes using a catalyst prepared by combining a solid catalyst component having a titanium compound supported on a carrier composed mainly of a magnesium halide with an organoaluminum compound and further adding to the resulting combined catalyst, an organosilicon compound having Si-O-C bond (Japanese patent publication No. Sho 58-21921/1983 and Japanese patent application laid-open Nos. Sho 54-94590/1979 and Sho 56-41206/1981), but these processes are still practically insufficient in the aspect of crystallinity of the resulting polymer. These supported type Ziegler catalysts are also inferior in the aspect of poison resistance relative to polymerization obstacles so that it is necessary to use a high purity $\alpha$-olefin and hence they are commercially disadvantageous.

US-A-3362916 and US-A-3328375 each propose a catalyst system for obtaining polymerisation comprising Ti trichloride, an alkylaluminium dihalide and an alkoxysilane; the Ti trichloride having been obtained by reaction of $TiCl_4$ with Al or an alkylaluminium dihalide. The catalytic effects and products are not satisfactory.

Thus, an improvement in the prior art, using a titanium trichloride composition according to which a high purity $\alpha$-olefin is not necessary so much and which has a superior poison resistance relative to polymerization obstacles, has been desired.

The present inventors have made extensive research on improvement in the prior art using the titanium trichloride composition, wherein particularly a novel catalyst component is combined with the titanium trichloride composition. As a result, we have found a catalyst having a far improved polymerization activity and crystallinity of the resulting polymer.

SUMMARY OF THE INVENTION

The object of the present invention is to provide a catalyst having a more enhanced polymerization activity and crystallinity, for producing $\alpha$-olefin polymers having a uniform particle size and a superior form.

The present invention resides in a process for polymerizing $\alpha$-olefins in the presence of a catalyst having combined

(1) a titanium trichloride composition obtained by reducing $TiCl_4$ with a reaction product of an organoaluminum compound with an electron donor,
(2) an organoaluminum compound and
(3) an alkoxy group- or phenoxy group-containing organosilicon compound expressed by the formula

$$R^1{}_n Si(OR^2)_{4-n}$$

wherein $R^1$ represents a hydrocarbon radical of $C_1$ to $C_{20}$, hydrogen atom or a halogen atom; $R^2$ represents a hydrocarbon radical of $C_1$ to $C_{20}$; and $0 \leqq n < 4$.

DETAILED DESCRIPTION OF PREFERRED EMBODIMENTS

As to the titanium trichloride composition used in the present invention, as far as it is at least a titanium trichloride composition obtained by reducing $TiCl_4$ with a reaction product of an organoaluminum compound with an electron donor, it may be used, including those which caused various changes during or after the reduction. As the titanium trichloride composition, those used in the previous inventions are preferred. The details described in the specification thereof are as follows:

A reaction product (I) of an organoaluminum compound with an electron donor is reacted with $TiCl_4$ to obtain a solid product (II), which is not subjected or subjected to polymerization treatment with an $\alpha$-olefin and further reacted with an electron donor and an electron acceptor to obtain a solid product (III) or (IV), which is used as the titanium trichloride composition.

The reaction of an organoaluminum compound ($A_1$) with an electron donor ($B_1$) is carried out at -20°C to +200°C, preferably -10°C to +100°C, for 30 seconds to 5 hours in a solvent (D). The addition order of ($A_1$) ($B_1$) and (D) has no particular limitation, and as to the proportions of their quantities used, 0.1 to 8 mols, preferably 1 to 4 mols of the electron donor and 0.5 to 5 $\ell$, preferably 0.5 to 2 $\ell$ of the solvent each per mol of the organoaluminum are suitable. As the solvent, aliphatic hydrocarbons are preferred. Thus, the reaction product (I) is obtained. The reaction product (I) may be used in the subsequent reaction without separating it, that is, in a liquid state just after completion of the reaction (which will be often referred to as the reaction liquid (I)).

The reaction of the reaction product (I) with $TiCl_4$ (C) is carried out at 0 to 200°C, preferably 10 to 90°C, for 5 minutes to 8 hours. Although it is preferred to use no solvent, aliphatic or aromatic hydrocarbons may be used. Mixing of (I), (C) and the solvent may be carried out in an optional order and mixing of the total quantities is preferred to be completed within 5 hours. As to the respective quantities used in the reaction, 0 to 3,000 m$\ell$ of the solvent per mol of $TiCl_4$ is used and the quantity of the reaction product (I) used is 0.05 to 10, preferably 0.06 to 0.2 in terms of a ratio of the number of A$\ell$ atoms in (I) to the number of Ti atoms in $TiCl_4$ (A$\ell$/Ti). After completion of the reaction, a liquid portion is separated off by filtering off or decantation, followed by repeatedly washing the residue with a solvent to obtain a solid product (II), which may be used in the subsequent step as it is, i.e. in a suspended state thereof in the solvent, or may be further dried, taken out in the form of solids and used in the subsequent step.

Further, the solid product (II) obtained by reacting the solid product (I) with $TiCl_4$ may also be subjected to polymerization treatment with an $\alpha$-olefin and used in the subsequent reaction.

In addition, the "polymerization treatment" referred to herein means a treatment wherein a small quantity of an $\alpha$-olefin is contacted with the solid product (II) under its polyemrizable conditions to polymerize the $\alpha$-olefin. This polymerization treatment results in a state where the solid product (II) is

3

coated with the resulting polymer.

The process of the polymerization treatment with an α-olefin includes

(1) a process wherein an α-olefin is added in an optional step during the reaction of the reaction liquid (I) with TiCℓ$_4$ to subject the resulting solid product (II) to polymerization treatment;

(2) a process wherein after completion of the reaction liquid (I) with TiCℓ$_4$, an α-olefin is added to subject the resulting solid product (II) to polymerization treatment; and

(3) a process wherein after completion of the reaction of the reaction liquid (I) with TiCℓ$_4$, a liquid portion is separated off by filtering off or decantation, followed by suspending the resulting solid product (II) in a solvent and further adding an organoaluminum compound and an α-olefin to subject the resulting material to polymerization treatment.

In the case where an α-olefin is added in an optional step during the reaction of the reaction liquid (I) with TiCℓ$_4$ and in the case where after completion of the reaction liquid (I) with TiCℓ$_4$, an α-olefin is added, the α-olefin is passed under the atmospheric pressure or added so as to give a pressure of 1.08 MPa (10 Kg/cm$^2$G) or lower, at a reaction temperature of 30 to 90 °C for 5 minutes to 10 hours. As to the quantity of the α-olefin added, it is preferred to use 10 to 5,000 g of α-olefin per 100 g of the solid product (II) and polymerize 0.05 to 1,000 g thereof.

In the case where the polymerization treatment with α-olefin is carried out after a procedure that after completion of the reaction of the reaction liquid (I) with TiCℓ$_4$, a liquid proportion has been separated off by filtering off or decantation, followed by suspending the resulting solid product (II) in a solvent, it is preferred that 100 g of the solid product (II) is added to 100 to 2,000 mℓ of a solvent and 5 to 500 g of an organoaluminum compound and 10 to 5,000 g of an α-olefin is added at a reaction temperature of 30 to 90 °C for 5 minutes to 10 hours under 0.1 to 1.08 MPa (0 to 10 Kg/cm$^2$G) to polymerize 0.05 to 1,000 g of the α-olefin. The solvent is preferably aliphatic hydrocarbons and the organaoaluminum compound may be the same as or different from that used for the reaction liquid (I). After completion of the reaction, a liquid portion is separated off by filtering off or decantation, followed by further repeatedly washing the residue with a solvent. The resulting solid product (II) subjected to the polymerization treatment (hereinafter referred to often as "solid product (II-A)") may be used in the subsequent step in a state where it is suspended in the solvent, as it is, or further dried, taken out in the form of solids and used.

The solid product (II) or (II-a) is then reacted with an electron donor (B$_2$) and an electron acceptor (E). This reaction may be carried out without any solvent, but use of aliphatic hydrocarbons affords preferred results. The quantities of the above substances used are as follows: 10 to 1,000 g, preferably 50 to 200 g of (B$_2$), 10 to 1,000 g, preferably 20 to 500 g of (E) and 0 to 3,000 mℓ, preferably 100 to 1,000 mℓ of solvent, each based on 100 g of the solid product (II) or (II-A). These three or four substances are preferred to be mixed at -10 °C to +40 °C for 30 seconds to 60 minutes, followed by reacting these at 40° to 200 °C, preferably 50° to 100 °C, for 30 seconds to 5 hours. The mixing order of the solid product (II) or (II-A), (B$_2$), (E) and the solvent has no particular limitation. (B$_2$) and (E) may be reacted together in advance of mixing these with the solid product (II) or (II-A), and in this case, (B$_2$) and (E) are reacted together at 10° to 100 °C for 30 minutes to 2 hours, followed by cooling the reaction product down to 40 °C or lower and then using it. After completion of the reaction of the solid product (II) or (II-A), (B$_2$) and (E), a liquid portion is separated off by filtering off or decantation, followed by repeatedly washing the resulting material with a solvent to obtain a solid product (III) or (IV).

The thus obtained solid product (III) or (IV) is used as a titanium trichloride composition.

A titanium trichloride composition obtained as above, an organoaluminum compound and an alkoxy group- or phenoxy group-containing organosilicon compound are combined to prepare the catalyst used in the present invention. Further, it is also a more preferred embodiment of the present invention to react an α-olefin with the catalyst and use the resulting preactivated catalyst.

The organoaluminum compound used in the present invention is expressed by the formula

Aℓ R$_n$R'$_n$X$_{3-(n+n')}$

wherein R and R' each represent hydrocarbon radicals such as alkyl group, aryl group, alkaryl group or cycloalkyl group; or alkoxy group ; X represents a halogen atom of F, Cℓ, Br or I; and n and n' each represent an optional number of $0 < n + n' \leq 3$. Its concrete examples are trialkylaluminums such as trimethylaluminum, triethylaluminum, tri-n-propylaluminum, tri-n-butylaluminum, tri-i-butylaluminum, tri-n-hexylaluminum, tri-i-hexylaluminum, tri-2-methylpentylaluminum, tri-n-octylaluminum or tri-n-decylaluminum; dialkylaluminum monohalides such as diethylaluminum monochloride, di-n-propylaluminum monochloride, di-i-butylaluminum monochloride, diethylaluminum monofluoride, diethylaluminum monobromides or diethylaluminum monoiodide; dialkylaluminum hydrides such as diethylaluminum hydride; alkylaluminum sesquihalides such as methylaluminum sesquichloride or ethylaluminum sesquichloride; and monoalkylaluminum dihalides such as ethylaluminum dichloride or i-butylaluminum dichloride; and besides, alkoxyalkylaluminums such as monoethoxydiethylaluminum or diethoxymonoethylaluminum, may also be used. These organoaluminums may be used in admixture of two or more kinds. The organoaluminum compound ($A_1$) for obtaining the reaction product (I) may be the same as or different from the organoaluminum compound ($A_2$) to be combined with the solid product (III), (IV) and (V).

As the electron donors used in the present invention, various ones are illustrated below, but as ($B_1$) and ($B_2$), it is preferred to use mainly ethers, and as to other electron donors, it is preferred to use them together with ethers.

Examples of compounds used as the electron donors are organic compounds having any one of oxygen, nitrogen, sulfur and phosphorus, namely ethers, alcohols, esters, aldehydes, aliphatic acids, ketones, nitriles, amines, amides, ureas or thioureas, isocyanates, azo compounds, phosphines, phosphites, phosphinites, $H_2S$ or thioethers or thioalcohols,. Concrete examples are ethers such as diethyl ether, di-n-propyl ether, di-n-butyl ether, diisoamyl ether, di-n-pentyl ether, di-n-hexyl ether, di-i-hexyl ether, di-n-octyl ether, di-i-octyl ether, di-n-dodecyl ether, diphenyl ether, ethylene glycol monoethyl ether, tetrahydrofuran; alcohols such as methanol, ethanol, propanol, butanol, pentanol, hexanol, octanol, phenol, cresol, xylenol, ethylphenol, naphthol, etc., esters such as methyl methacrylate, ethyl acetate, butyl formate, amyl acetate, vinyl acetate, vinyl butyrate, ethyl benzoate, propyl benzoate, butyl benzoate, octyl benzoate, 2-ethylhexyl benzoate, methyl toluylate, ethyl toluylate, 2-ethylhexyl toluylate, methyl anisate, ethyl anisate, propyl anisate, ethyl cinnamate, methyl naphthoate, ethyl naphthoate, propyl naphthoate, butyl naphthoate, 2-ethylhexyl naphthoate, ethyl phenylacetate; aldehydes such as acetaldehyde or benzaldehyde; aliphatic acids such as formic acid, acetic acid, propionic acid, butyric acid, oxalic acid, succinic acid, acrylic acid or maleic acid; aromatic acids such as benzoic acids; ketones such as methyl ethyl ketone, methyl isobutyl ketone or benzophenone; nitriles such as acetonitrile; amines such as methylamine, diethylamine, tributylamine, triethanolamine, $\beta$(N,N-dimethylamino)ethanol, pyridine, quinoline, $\alpha$-picoline, 2,4,6-trimethylpyridine, N,N,N',N'-tetramethylhexaneethylenediamine, aniline or dimethylaniline; amides such as formamide, hexamethylphosphoric acid triamide, N,N,N',N',N''-pentamethyl-N'-$\beta$-dimethylaminomethyl-phosphoric acid triamide or octamethylpyrophosphoroamide; ureas such as N,N,N',N'-tetramethylurea; isocyanates such as phenyl isocyanate or toluyl isocyanate; azo compounds such as azobenzene; phosphines such as ethylphosphine, triethylphosphine, tri-n-butylphosphine, tri-n-octylphosphine, triphenylphosphine, or triphenylphosphine oxide; phosphites such as dimethylphosphite, di-n-octylphosphite, triethylphosphite, tri-n-butylphosphite or triphenylphosphite; phosphinites such as ethyldiethylphosphinite, ethylbutylphosphinite or phenyldiphenylphosphinite; thioethers such as diethyl thioether, diphenyl thioether, methyl phenyl thioether, ethylene sulfide or propylene sulfide; and thioalcohols such as ethyl thioalcohol, n-propyl thioalcohol or thiophenol. These electron donors may be used in admixture. The electron donor ($B_1$) for obtaining the reaction product (I) may be the same as or different from the electron donor ($B_2$) to be reacted with the solid product (II).

The electron acceptor (E) used in the present invention is represented by halides of elements of Groups III to VI of the Periodic Table. Concrete examples thereof are anhydrous aluminum chloride, silicon tetrachloride, stannous chloride, stannic chloride, titanium tetrachloride, zirconium tetrachloride, phosphorus trichloride, phosphorus pentachloride, vanadium tetrachloride and antimony pentachloride; and these may be used in admixture. Among these, titanium tetrachloride is most preferred.

As the solvent, the following may be used: aliphatic hydrocarbons such as n-pentane, n-hexane, n-heptane, n-octane or i-octane. Further, halogenated hydrocarbons, such as carbon tetrachloride, chloroform, dichloroethane, trichloroethylene or tetrachloroethylene, may be used in place of or together with aliphatic hydrocarbons.

Examples of the aromatic compound are aromatic hydrocarbons such as naphthalene and their derivatives such as alkyl substitutes, e.g. mesitylene, durene, ethylbenzene, isopropylbenzene, 2-ethylnaphthalene or 1-phenylnaphthalene, and halides e.g. monochlorobenzene, chlorotoluene, chloroxylene, chloroethylbenzene, dichlorobenzene or bromobenzene.

Examples of the $\alpha$-olefin used for polymerization treatment are linear chain monoolefins such as ethylene, propylene, butene-1, pentene-1, hexene-1 or heptene-1; branched chain monoolefins such as 4-methyl-pentene-1, 2-methyl-pentene-1 or 3-methyl-butene-1; or styrene These $\alpha$-olefins may be the same as or different from $\alpha$-olefins for preactivation or as the object of polymerization, and may be used in admixture of two or more kinds.

The thus obtained titanium trichloride composition is then combined with an organoaluminum compound and an alkoxy group- or phenoxy group-containing organosilicon compound to obtain a catalyst, which is then used for $\alpha$-olefin polymerization in a conventional manner, or more preferably a preactivated catalyst obtained by further reacting an α-olefin is used.

As the organoaluminum compound used for the α-olefin polymerization of the present invention, organoaluminum compounds as used in the preparation of the above-mentioned titanium trichloride composition may be used. The organoaluminum compound may be the same as or different from that used in the preparation of the titanium trichloride composition.

As the alkoxy group- or phenoxy group-containing organosilicon compound used in the α-olefin polymerization of the present invention, an alkoxy group- or phenoxy group-containing organosilicon compound expressed by the formula

$$R^1_n Si(OR^2)_{4-n}$$

wherein $R^1$ represents a hydrocarbon radical of $C_1$ to $C_{20}$, hydrogen atom or a halogen atom; $R^2$ represents a hydrocarbon radical of $C_1$-$C_{20}$; and $0 \leq n < 4$ is used.

Concrete examples thereof are tetramethoxysilane, methyltrimethoxysilane, dimethyldimethoxysilane, trimethylmethoxysilane, allyloxytrimethylsilane, phenyltrimethoxysilane, diphenyldimethoxysilane, methylphenyldimethoxysilane, triphenylmethoxysilane, vinyltrimethoxysilane, methyltriethoxysilane, dimethyldiethoxysilane, trimethylethoxysilane, allyltriethoxysilane, ethyltriethoxysilane, vinyltriethoxysilane, diethyldiethoxysilane, triethylethoxysilane, diphenyldiethoxysilane, triphenylethoxysilane, pentyltriethoxysilane, n-octyltriethoxysilane, n-octadecyltriethoxysilane, tetraisopropoxysilane, methyltriisopropoxysilane, dimethyldiisopropoxysilane, trimethylisopropoxysilane, tetra-n-butoxysilane, methyltri-n-butoxysilane, tetra(2-ethylbutoxy)silane, methyltriphenoxysilane, dimethyldiphenoxysilane, trimethylphenoxysilane, diphenyldimethoxysilane, trimethoxysilane, triethoxysilane, triethoxychlorosilane, triisopropoxychlorosilane and tri-n-butoxychlorosilane

As to the proportions of the various catalyst components, 0.1 to 500 mols of the organoaluminum compound and 0.05 to 1.4 mol of the alkoxy group- or phenoxy group-containing organosilicon compound each per mol of Ti in the titanium trichloride composition are used, and 0.005 to 5 mols of the alkoxy group- or phenoxy group-containing organosilicon compound per mol of the organoaluminum compound are used.

Further, mixing of the above three components may be carried out without any inert solvent, but its use is preferred, and the mixing order is optional. They may be mixed in advance of feeding them into a polymerization vessel or may be separately fed into a polymerization vessel and contacted together inside the polymerization vessel. Further, in the case where an α-olefin is reacted with the catalyst and the resulting preactivated catalyst is used, the alkoxy group- or phenoxy group-containing organosilicon compound may be added in advance of the preactivation or may be contacted after completion of the preactivation.

In the case of slurry polymerization or bulk polymerization, even a mixed catalyst of the titanium trichloride composition, the organoaluminum compound and the alkoxy group- or phenoxy group-containing organosilicon compound exhibits a sufficient effectiveness, but in the case of gas phase polymerization, a preactivated catalyst obtained by reacting an α-olefin with the above catalyst is preferred. In the case of slurry polymerization or bulk polymerization, followed by gas phase polymerization, even when the initially used catalyst is the former, the reaction of the α-olefin has already been carried out before the gas phase polymerization; hence the same catalyst as the latter is obtained to exhibit a superior effectiveness.

In the preactivation, 0.1 to 500 g of an organoaluminum, 0 to 50 ℓ of a solvent, 0 to 1,000 mℓ of hydrogen and 0.05 to 5,000 g, preferably 0.05 to 3,000 g of an α-olefin each per g of the titanium trichloride composition are used.

Further, at that time, an alkoxy group- or phenoxy group-containing organosilicon compound may be used or not used.

An α-olefin is reacted at 0° to 100°C for one minute to 20 hours, and it is preferred to react 0.01 to 2,000 g, preferably 0.05 to 200 g of an α-olefin per g of the titanium trichloride composition.

The preactivation may be carried out in a hydrocarbon solvent such as propane, butane, n-pentane, n-hexane, n-heptane, benzene or toluene, and may be carried out either in a liquefied α-olefin such as liquefied propylene or liquefied butene-1, or in gaseous ethylene or propylene, and further may be carried out in the coexistence of hydrogen.

In the preactivation, polymer particles obtained in advance by slurry polymerization, bulk polymerization or gas phase polymerization may be made coexistent. The polymer may be the same as or different from α-olefin polymer as the object of polymerization. The quantity of the polymer particles capable of being made coexistent is in the range of 0 to 5,000 g per g of the titanium trichloride composition.

The solvent or α-olefin used in the preactivation may be removed by distilling off under reduced pressure, and filtering off, midway during the preactivation or after completion of the preactivation, and a solvent may be added in order to suspend the solid product in a solvent in a quantity not exceeding 80 ℓ per g of the solid product.

The preactivation process includes various embodiments such as

(1) a process wherein an α-olefin is contacted with a catalyst having combined the titanium trichloride composition and an organoaluminum, followed by slurry reaction, bulk reaction or gas phase reaction;

(2) a process wherein the solid product (III) is combined with an organoaluminum compound in the presence of an α-olefin;

(3) a process wherein an α-olefin polymer is made coexistent in the process (1) or (2); and

(4) a process wherein hydrogen is made coexistent in the process (1), (2) or (3). There is no substantial difference between whether the catalyst is brought into a slurry state or into powder form.

The thus combined catalyst of the titanium trichloride composition, an organoaluminum compound and an alkoxy group- or phenoxy group-containing organosilicon compound, or a catalyst further preactivated with an α-olefin is used for producing α-olefin polymers.

The polymerization form of polymerizing α-olefins in the process of the present invention includes ① slurry polymerization carried out in a hydrocarbon solvent such as n-pentane, n-hexane, n-heptane, n-octane, benzene or toluene; ② bulk polymerization carried out in a liquefied α-olefin monomer such as liquefied propylene or liquefied butene-1; ③ gas phase polymerization of polymerizing an α-olefin such as ethylene or propylene in gas phase and ④ a process of stepwise combining two or more of the above processes ① to ③ . In any of the above cases, polymerization is carried out at a polymerization temperature of room temperature (20°C) to 200°C, under a polymerization pressure of the atmospheric pressure (0.1 MPa) (0 Kg/cm$^2$G) to 5 MPa (50Kg/cm$^2$G) and usually for about 5 minutes to 20 hours.

In the polymerization, addition of hydrogen in a suitable quantity for regulating the molecular weight and other means are carried out as in the case of conventional polymerization processes. The process of the present invention is also applied to a multistage polymerization of α-olefins, and a process of connecting 2 to 10 reactors in series in gas phase polymerization, slurry polymerization or bulk polymerization, may also be employed, and further, it is also possible to vary the polymerization phase, the catalyst, the α-olefin and the quantity of hydrogen fed in the respective multi-stage reactors.

Examples of the α-olefin used for the polymerization in the process of the present invention are linear chain monoolefins such as ethylene, propylene, butene-1, hexene-1, and octene-1; branched chain monoolefins such as 4-methylpentene-1, 2-methyl-pentene-1, and 3-methylbutene-1; diolefins such as butadiene, isoprene, and chloroprene; styrene. In the process of the present invention, these olefins may be subjected to not only homopolymerization but also copolymerization in combination with other olefins, for example, in combination of propylene with ethylene, butene-1 with ethylene, propylene with butene-1, or three components of propylene, ethylene and butene-1, and further, it is also possible to carry out block copolymerization by varying the kind of α-olefin fed in a multi-stage polymerization.

The main effectiveness of the present invention consists in that a highly crystalline polymer having a good powder form is obtained with a high polymer yield.

The effectiveness of the present invention will be more concretely described.

A first effectiveness of the present invention consists in that the resulting catalyst has a very high activity; for example, when the titanium trichloride composition prepared in the process of the previous inventions was used in the catalyst preparation of the present invention, the polymer yields per g of the titanium trichloride composition amounted to 7,060 to 10,940 (see Examples 1 to 18), that is, reached 1.4 to 1.9 times those obtained in the previous inventions (see Comparative examples 1 and 3 to 19).

A second effectiveness of the present invention consists in that the percentage of amorphous polymer formed in the production of α-olefin polymers lower to afford a highly crystalline polymer. For example, in the production of polypropylene, the resulting isotactic polypropylene in the form of n- hexane ( boiling )-insoluble has an isotactic index of 97.1 to 98.1 (see Examples 1 to 18), that is, polypropylene having a far higher crystallinity than those of the previous inventions using no alkoxy group- or phenoxy group-containing catalyst component (see Comparative examples 1 and 3 to 19). Thus, even when atactic polymer is not removed, no disadvantage occurs such as lowering of physical properties, e.g. stiffness, heat stability, etc. so that it is possible to omit an atactic polymer-removing step to thereby simplify the production process of the polymer.

A third effectiveness of the present invention consists in that a polymer having a good polymer particle form is obtained. The form of the resulting particles is close to sphere and the bulk density (BD) of the polymer is in the range of 0.45 to 0.50; hence the volume of storage vessel per unit weight of polymer is sufficient to be small so that it is possible to make the polymer production plant compact and also there occurs neither trouble of clogging of the lines of the plant due to agglomeration of polymer particles nor trouble of transportation due to fine particles. Further, a long term stabilized operation is possible even in the case of gas phase polymerization.

The present invention will be described in more detail by way of Examples and Comparative examples.

In addition, the term "polymer yield" employed in Examples and Comparative examples refers to the quantity (g) of an $\alpha$-olefin polymer obtained per g of the titanium trichloride composition and shows the polymerization activity of catalyst. II represents isotactic index exhibiting the crystallinity of catalyst and is given by the following formula

$$\text{II} = \frac{\text{Quantity of boiling n-hexane-insoluble } \alpha\text{-olefin polymer}}{\text{Quantity of total } \alpha\text{-olefin polymers}} \times 100$$

In addition, in the cases of slurry polymerization and bulk polymerization, the solvent-soluble polymer was freed from the solvent by its vaporization on heating and the thus recovered polymer was included in the quantity of the total $\alpha$-olefin polymers.

Further, BD represents the bulk density of polymer powder (g/m$\ell$) and MFR refers to flow properties according to ASTM D-1238(L).

## Example 1

### (1) Preparation of titanium trichloride composition

n-Hexane (60 m$\ell$), diethylaluminum monochloride (DEAC) (0.05 mol) and diisoamyl ether (0.12 mol) were mixed at 25°C for one minute and reacted at the same temperature for 5 minutes to obtain a reaction liquid (I) (molar ratio of diisoamyl ether/DEAC: 2.4). TiC$\ell_4$ (0.4 mol) was placed in a reactor purged with nitrogen gas and heated to 35°C, followed by dropwise adding thereto the total quantity of the above reaction liquid (I) over 30 mintues, keeping the mixture at the same temperature for 30 minutes, raising the temperature up to 75°C, further reacting it for one hour, cooling the reaction mixture down to room temperature, removing the supernatant and four times repeating a procedure of adding n-hexane (400 m$\ell$) and removing the supernatant by decantation to obtain a solid product (II) (19 g).

To a suspension of the total quantity of this product (II) in n-hexane (300 m$\ell$) were added diisoamyl ether (16 g) and TiC$\ell_4$ (35 g) at room temperature over about one minute, followed by reacting the mixture at 65°C for one hour, cooling the reaction mixture down to room temperature (20°C) after completion of the reaction, removing the supernatant by decantation, five times repeating a procedure of adding n-hexane (400 m$\ell$), agitating the mixture for 10 minutes, allowing it to stand and removing the supernatant and drying the resulting material under reduced pressure to obtain a titanium trichloride composition. The content of Ti atom in 1 g of the titanium trichloride composition was 252 mg.

### (2) Preparation of preactivated catalyst

Into a 2 $\ell$ capacity stainless reactor equipped with slanted blades and purged with nitrogen gas were added n-hexane (20 m$\ell$), diethylaluminum monochloride (280 mg), the titanium trichloride composition (30 mg) and phenyltrimethoxysilane (30 mg), followed by introducing hydrogen (150 m$\ell$), reacting propylene under a propylene partial pressure of 5 Kg/cm$^2$G for 5 minutes and removing unreacted propylene, hydrogen and n-hexane under reduced pressure to obtain a preactivated catalyst in powder form (propylene reacted per g of the titanium trichloride composition: 110 g).

### (3) Propylene polymerization

Into the above reactor containing the preactivated catalyst was introduced hydrogen (300 m$\ell$), followed by carrying out gas phase polymerization under a propylene partial pressure of 2.5 MPa (25 Kg/cm$^2$G), at a polymerization temperature of 70°C and for 2 hours. After completion of the reaction, methanol (5 g) was introduced to carry out killing reaction at 70°C for 30 minutes, followed by cooling the reaction mixture down to room temperature and drying it to obtain a polymer (294 g). The polymer yield per g of the titanium trichloride composition was 9,800 g, the isotactic index was 98.1, the BD of the polymer was 0.50 and the form of the polymer particles was close to sphere.

Comparative example 1

Gas phase polymerization of propylene was carried out in the same manner as in Example 1 except that phenyltrimethoxysilane was not used in Example 1 (2). The results are shown in Table 1.

Comparative example 2

Gas phase polymerization of propylene was carried out in the same manner as in Example 1 except that phenyltrimethoxysilane was replaced by $SiCl_4$ (25 mg) in Example 1 (2). The results are shown in Table 1.

Example 2

(1) Preparation of titanium trichloride composition

n-Heptane (40 mℓ), diethylaluminum monochloride (0.05 mol), diisoamyl ether (0.09 mol) and di-n-butyl ether (0.05 mol) were reacted at 18°C for 30 minutes to obtain a reaction liquid, followed by dropwise adding this liquid into $TiCl_4$ (0.275 mol) at 40°C for 300 minutes, keeping the mixture at the same temperature for 1.5 hour to react it, raising the temperature up to 65°C, further reacting for one hour, removing the supernatant, six times repeating a procedure of adding n-hexane (200 mℓ) and removing the supernatant by decantation, suspending the resulting solid product (II) (18g) in n-hexane (500 mℓ), adding diethylaluminum monochloride (2 g), adding propylene (10 g) at 60°C, and reacting for one hour to obtain a solid product (II) subjected to the polymerization treatment (quantity of propylene reacted: 5.0 g), removing the supernatant after the reaction, twice repeating a procedure of adding n-hexane (300 mℓ) and removing the supernatant by decantation, suspending the solid product (II) (23 g) subjected to the polymerization treatment in n-hexane (40 mℓ), adding $TiCl_4$ (18 g) and n-butyl ether (18 g), reacting the mixture at 60°C for 3 hours, removing the supernatant by decantation after the reaction, three times repeating a procedure of adding n-hexane (200 mℓ), agitating the mixture for 5 minutes, allowing it to stand and removing the supernatant and drying under reduced pressure to obtain a titanium trichloride composition. The content of Ti atom per g of the titanium trichloride composition was 200 mg.

(2) Preparation of preactivated catalyst

Into a 2 ℓ capacity stainless reactor equipped with slanted blades and purged with nitrogen gas were added n-hexane (20 mℓ), diethylaluminum monochloride (270 mg), the titanium trichloride composition (28 mg) and ethyltriethoxysilane (19 g), followed by reacting propylene under a propylene partial pressure of 0.3 MPa (2 Kg/cm$^2$G) at 40°C for 10 minutes (propylene reacted per g of titanium trichloride composition: 24.3 g), and removing unreacted propylene and n-hexane under reduced pressure to obtaina preactivated catalyst.

(3) Propylene polymerization

Gas phase polymerization of propylene was carried out in the same manner as in Example 1 (3) except that the catalyst obtained by the preactivation was used. The results are shown in Table 1.

Comparative example 3

Gas phase polymerization of propylene was carried out in the same manner as in Example 2 except that ethyltriethoxysilane was not used in Example 2 (2). The results are shown in Table 1.

Example 3

In Example 1 (2), preactivation was carried out without phenyltrimethoxysilane, followed by purging unreacted propylene and hydrogen , adding n-hexane (1,000 mℓ) and methyltrimethoxysilane (11 mg), further adding hydrogen (150 mℓ), carrying out slurry polymerization under a propylene partial pressure of 1.28 MPa (12 Kg/cm$^2$G), at 70°C for 2.5 hours and stripping n-hexane with steam to obtain a polymer. The results are shown in Table 1.

# EP 0 284 287 B1

## Comparative example 4

Slurry polymerization of propylene was carried out in the same manner as in Example 3 except that methyltrimethoxysilane was not used in Example 3. The results are shown in Table 1.

## Example 4

n-Hexane (1,000 mℓ), diethylaluminum monochloride (300 mg) and the titanium trichloride composition (20 mg) obtained in Example 2, were placed in a reactor, followed by reacting propylene under a propylene partial pressure of 0.22 MPa (1.2 Kg/cm$^2$G) at 20°C for 10 minutes to carry out preactivation (quantity of propylene reacted per g of the titanium trichloride composition: 0.9 g), purging unreacted propylene, feeding diphenyldimethoxysilane (24 mg) and hydrogen (120 mℓ), carrying out slurry polymerization under a propylene partial pressure of 1.08 MPa (10 Kg/cm$^2$G), at 70°C for 2.5 hours and removing n-hexane by steam-stripping to obtain a polymer. The results are shown in Table 1.

## Comparative example 5

Slurry polymerization of propylene was carried out in the same manner as in Example 4 except that diphenyldimethoxysilane was not used. The results are shown in Table 1.

## Example 5

A catalyst was obtained in the same manner as in Example 3 except that methyltrimethoxysilane was replaced by trimethylethoxysilane (12 mg), followed by feeding hydrogen (300 mℓ), feeding propylene (600 g), carrying out bulk polymerization at 70°C under a propylene partial pressure of 3.14 MPa (31 Kg/cm$^2$G) for one hour, purging unreacted propylene after completion of the reaction and carrying out post-treatment as in Example 1 to obtain a polymer. The results are shown in Table 1.

## Comparative example 6

Bulk polymerization of propylene was carried out in the same manner as in Example 5 except that trimethylethoxysilane was not used. The results are shown in Table 1.

## Example 6

A catalyst was obtained in the same manner as in Example 4 except that diphenyldimethoxysilane was replaced by triphenylethoxysilane (24 mg), followed by feeding hydrogen (300 mℓ), feeding propylene (600 g), carrying out bulk polymerization at 70°C under a propylene partial pressure of 3.14 MPa (31 Kg/cm$^2$G) for one hour, purging unreacted propylene after completion of the reaction and carrying out post-treatment as in Example 2 to obtain a polymer. The results are shown in Table 1.

## Comparative example 7

Bulk polymerization of propylene was carried out in the same manner as in Example 6 except that triphenylethoxysilane was not used. The results are shown in Table 1.

## Example 7

Gas phase polymerization of propylene was carried out in the same manner as in Example 1 except that hydrogen (250 mℓ) and a propylene partial pressure of 2.16 MPa (21 Kg/cm$^2$G) were employed, followed by purging unreacted propylene and hydrogen, successively carrying out ethylene polymerization under a hydrogen partial pressure of 0.89 MPa (8 Kg/cm$^2$G) and an ethylene partial pressure of 1.28 MPa (12 Kg/cm$^2$G) at 70°C and for 2 hours and then carrying out post-treatment as in Example 1 to obtain a propyleneethylene block copolymer. The results are shown in Table 2.

10

Comparative example 8

Example 7 was repeated except that a catalyst obtained by carrying out preactivation without using phenyltrimethoxysilane was used, to obtain a propylene-ethylene block copolymer. The results are shown in Table 2.

Example 8

Gas phase polymerization of propylene was carried out in the same manner as in Example 2 except that hydrogen (250 mℓ) and a propylene partial pressure of 2.16 MPa (21 Kg/cm$^2$G) were employed, followed by purging unreacted propylene and hydrogen, successively carrying out ethylene polymerization under a hydrogen partial pressure of 1.08 MPa (10 Kg/cm$^2$G) and an ethylene partial pressure of 1.08 MPa (10 Kg/cm$^2$G) at 65°C for 2 hours and then carrying out as in Example 2 to obtain a propylene-ethylene block copolymer. The results are shown in Table 2.

Comparative example 9

Example 8 was repeated except that a catalyst obtained by carrying out preactivation without using ethyltriethoxysilane to obtain a propylene-ethylene block copolymer. The results are shown in Table 2.

Example 9

Slurry polymerization of propylene was carried out in the same manner as in Example 3 except that a catalyst not subjected to preactivation treatment with propylene was used and hydrogen (120 mℓ) and a propylene partial pressure of 1.08 MPa (10 Kg/cm$^2$G) were used, followed by purging unreacted propylene and hydrogen, distilling off n-hexane under reduced pressure till it was contained by 30% by weight in the resulting polymer, introducing the solvent-containing polymer into a 20 ℓ capacity fluidized bed of 20 cm in diameter equipped with agitating elements, successively introducing hydrogen (450 mℓ), thereafter carrying out gas phase polymerization reaction at a reaction temperature of 70°C, under a propylene partial pressure of 2.16 MPa (21 Kg/cm$^2$G) for 2 hours while circulating propylene at a flow rate of 5 cm/sec. and fluidizing the polymer and there-after carrying out post-treatment as in Example 1 to obtain a polymer. The results are shown in Table 2.

Comparative example 10

Slurry polymerization was carried out in the same manner as in Example 9 except that methyltrimethoxysilane was not used, followed by carrying out gas phase polymerization to obtain a polymer. The results are shown in Table 2.

Example 10

Slurry polymerization was carried out in the same manner as in Example 9, except that diethylaluminum monochloride (300 mg), dimethyldiethoxysilane (12 mg) and the titanium trichloride composition (20 mg) obtained in Example 2 were used, followed by successively carrying out gas phase polymerization. The results are shown in Table 2.

Comparative example 11

Slurry polymerization was carried out in the same manner as in Example 10 except that dimethyldiethoxysilane was not used, followed by carrying out gas phase polymerization to obtain a polymer. The results are shown in Table 2.

Example 11

A preactivated catalyst in powder form was obtained in a reactor in the same manner as in Example 1 (1) and (2), followed by introducing hydrogen (300 mℓ), propylene (200 g) and butene-1 (30 g), carrying out bulk polymerization under a propylene partial pressure of 2.65 MPa (26 Kg/cm$^2$G) at 60°C for 30 minutes (quantity of copolymer: 38 g), thereafter flashing the resulting slurry containing unreacted propylene into a fluidized bed equipped with agitating elements as used in Example 9 and successively carrying out gas phase polymerization in the same manner as in Example 9 to obtain a polymer. The results are shown in Table 2.

## Comparative example 12

Bulk polymerization was carried out in the same manner as in Example 11 except that phenyltrimethoxysilane was not used, followed by carrying out gas phase polymerization to obtain a polymer. The results are shown in Table 2.

## Example 12

Bulk polymerization was carried out in the same manner as in Example 11 except that a preactivated catalyst obtained as in Example 2 (1) and (2) was used, followed by carrying out gas phase polymerization to obtain a polymer. The results are shown in Table 2.

## Comparative example 13

Bulk polymerization was carried out in the same manner as in Example 12 except that ethyltriethoxysilane was not used, followed by gas phase polymerization to obtain a polymer. The results are shown in Table 2.

## Example 13

(1) Preparation of titanium trichloride composition

n-Heptane (80 mℓ), di-n-butylaluminum monochloride (0.16 mol) and di-n-butyl ether (0.10 mol) were mixed at 30°C for 3 minutes, followed by reacting the mixture for 20 minutes to obtain a reaction liquid (I), followed by dropwise adding the total quantity of the reaction liquid (I) to a solution consisting of toluene (50 mℓ) and $TiCl_4$ (0.64 mol) kept at 45°C over 60 minutes, raising the temperature up to 85°C, further reacting the mixture for 2 hours, cooling the reaction mixture down to room temperature, removing the supernatant, twice repeating a procedure of adding n-heptane (300 mℓ) and removing the supernatant by decantation to obtain a solid product (II) (49 g), suspending the total quantity of this product (II) in n-heptane (300 mℓ), adding di-n-butyl ether (20 g) and $TiCl_4$ (150 g) at room temperature over about 2 minutes, reacting the mixture at 90°C for 2 hours, cooling the reaction mixture, and carrying out decantation, washing with n-heptane and drying to obtain a titanium trichloride composition. The content of Ti atom in 1 g of the titanium trichloride composition was 255 mg.

(2) Preparation of preactivated catalyst

Into a reactor as in Example 1 (2) were introduced n-pentane (4 mℓ), diethylaluminum monochloride (160 mg), allyltriethoxysilane (20 mg), the titanium trichloride composition (20 mg) obtained in the above (1) and polypropylene powder (5 g), followed by mixing these, removing n-pentane under reduced pressure, carrying out gas phase reaction at 30°C, under a propylene partial pressure of 0.18 MPa (0.8 Kg/cm$^2$G) for 20 minutes while fluidising the resulting catalyst with propylene gas, and removing unreacted propylene to obtain a preactivated catalyst (quantity of propylene reacted per g of titanium trichloride composition: 2.6 g).

(3) Propylene polymerization

Gas phase polymerization of propylene was carried out in the same manner as in Example 1 (3), using the preactivated catalyst obtained in the above (2). The results are shown in Table 3.

## Comparative example 14

Gas phase polymerization of propylene was carried out in the same manner as in Example 13 except that allyltriethoxysilane was not used in Example 13 (2). The results are shown in Table 3.

Example 14

(1) Preparation of titanium trichloride composition

n-Octane (80 mℓ), diisopropylaluminum monochloride (0.05 mol) and di-n-octyl ether (0.11 mol) were reacted at 35°C for 4 hours, followed by dropwise adding the resulting reaction liquid into TiCℓ₄ (0.25 mol) at 31°C over 120 minutes, reacting the mixture at 40°C for 30 minutes, raising the temperature up to 50°C, reacting the resulting material for 30 minutes, adding propylene (10 g), reacting the mixture at the same temperature, for 50 minutes, filtering off the liquid, and twice repeating a procedure of adding n-octane (300 mℓ), agitating the mixture for 5 minutes and filtering off the supernatant to obtain a solid product (II) subjected to polymerization treatment (solid product (II), 17.5 g; quantity of propylene reacted; 4.5 g). To this solid product subjected to polymerization treatment were added n-octane (40 mℓ), diisoamyl ether (22 g) and TiCℓ₄ (14 g), followed by reacting the mixture at 85°C for 30 minutes, four times repeating a procedure of filtering, adding n-pentane (100 mℓ), agitating for 10 minutes and filtering off and drying to obtain a titanium trichloride composition. The content of Ti atom in 1 g of the titanium trichloride composition was 205 mg.

(2) Preparation of preactivated catalyst

A preactivated catalyst was obtained in the same manner as in Example 13 (2) except that the titanium trichloride composition (20 mg) obtained in the above (1) was used as a titanium trichloride composition and vinyltrimethoxysilane (15 mg) was used in place of allyltriethoxysilane.

(3) Propylene polymerization

Gas phase polymerization of propylene was carried out in the same manner as in Example 13 (3), using the preactivated catalyst obtained in the above (2). The results are shown in Table 3.

Comparative example 15

Gas phase polymerization of propylene was carried out in the same manner as in Example 14 except that vinyltrimethoxysilane in Example 14 (2) was not used. The results are shown in Table 3.

Example 15

(1) Preparation of titanium trichloride composition

In place of reacting diisoamyl ether and TiCℓ₄ with the solid product (II) in Example 1 (1), diisoamyl ether (38 g), SiCℓ₄ (12 g) and TiCℓ₄ (17 g) were added into n-hexane (200 mℓ) at room temperature (20°C) over about one minute, followed by adding the solid product (II) (19 g), reacting the mixture at 75°C for 2 hours, washing the resulting material with n-hexane after completion of the reaction and drying it to obtain a titanium trichloride composition. The content of Ti atom in 1 g of the titanium trichloride composition was 254 mg.

(2) Propylene polymerization

Into a reactor as used in Example 1 (2) and (3) were introduced n-hexane (1,000 mℓ), diisopropylaluminum chloride (260 mg), trimethylphenoxysilane (8 mg) and the titanium trichloride composition (20 mg) obtained in the above (1), followed by carrying out slurry polymerization of propylene in the same manner as in Example 3 but without carrying out preactivation treatment. The results are shown in Table 3.

Comparative example 16

Slurry polymerization of propylene was carried out in the same manner as in Example 15 except that trimethylphenoxysilane in Example 15 (2) was not used. The results are shown in Table 3.

## EP 0 284 287 B1

### Example 16

(1) Preparation of titanium trichloride composition

A titanium trichloride composition was obtained in the same manner as in Example 2 (1) except that propylene (10 g) was replaced by butene-1 (10 g) to obtain a solid product (II) subjected to polymerization treatment (19.5 g) (quantity of butene-1 reacted: 1.5 g).

(2) Propylene polymerization

Slurry polymerization of propylene was carried out without carrying out preactivation treatment in the same manner as in Example 15 except that the titanium trichloride composition (20 mg) obtained in the above (1) was used as a titanium trichloride composition in Example 15 (2). The results are shown in Table 3.

### Comparative example 17

Slurry polymerization of propylene was carried out in the same manner as in Example 16 (2) except that trimethylphenoxysilane was not used. The results are shown in Table 3.

### Example 17

Example 1 was repeated except that in the preactivation of Example 1, phenyltrimethoxysilane was replaced by triethoxychlorosilane (20 mg), propylene was replaced by butene-1 and butene-1 was reacted under 0.15 MPa (0.5 Kg/cm$^2$G) of butene-1, at 35 °C for 10 minutes (quantity of butene-1 reacted per g of solid product (III): 0.3 g). The results are shown in Table 3.

### Comparative example 18

A preactivated catalyst was obtained in the same manner as in Example 17 except that triethoxychlorosilane was not used, followed by polymerization as in Example 17. The results are shown in Table 3.

### Example 18

Preactivation was carried out in the same manner as in Example 2 (2) except that diethylaluminum monochloride (280 mg) was replaced by triethylaluminum (220 mg) and also ethyltriethoxysilane was replaced by triethoxycyclosilane (10 mg), followed by carrying out ethylene polymerization in the same manner as in Example 2 (3) except that hydrogen (1.28 MPa) (12 Kg/cm$^2$G), an ethylene partial pressure of 1.28 MPa (12 Kg/cm$^2$G) and 85 °C were employed, to obtain a polymer. The results are shown in Table 3.

### Comparative example 19

Ethylene polymerisation was carried out in the same manner as in Example 18 except that a catalyst preactivated without using triethoxychlorosilane was used. The results are shown in Table 3.

Table 1

| No. of Example or Comp. ex. | Organosilicon compound containing an alkoxy group | | Polymerization results | | | |
| --- | --- | --- | --- | --- | --- | --- |
| | Name of compound | Used, mmol | Polymer yield | I I | M F R | B D |
| Ex. 1 | Phenyltrimethoxysilane | 0 . 1 5 | 9 8 0 0 | 9 8 . 1 | 4 . 6 | 0 . 5 0 |
| Comp.ex.1 | | 0 | 5 1 5 0 | 9 6 . 6 | 4 . 5 | 0 . 5 0 |
| Comp.ex.2 | SiCℓ₄ | 0 . 1 5 | 4 8 7 0 | 9 6 . 8 | 4 . 5 | 0 . 4 9 |
| Ex. 2 | Ethyltriethoxysilane | 0 . 1 0 | 1 0 2 0 0 | 9 7 . 8 | 4 . 5 | 0 . 5 0 |
| Comp.ex.3 | | 0 | 6 4 2 0 | 9 6 . 4 | 4 . 5 | 0 . 5 0 |
| Ex. 3 | Methyltrimethoxysilane | 0 . 0 8 | 7 8 5 0 | 9 8 . 0 | 2 . 7 | 0 . 4 8 |
| Comp.ex.4 | | 0 | 5 3 8 0 | 9 6 . 1 | 2 . 6 | 0 . 4 8 |
| Ex. 4 | Dipehnyldimethoxysilane | 0 . 1 0 | 9 3 0 0 | 9 7 . 9 | 3 . 6 | 0 . 4 9 |
| Comp.ex.5 | | 0 | 6 7 0 0 | 9 6 . 1 | 3 . 8 | 0 . 4 9 |
| Ex. 5 | Trimethylethoxysilane | 0 . 1 0 | 7 1 0 0 | 9 7 . 8 | 4 . 3 | 0 . 4 7 |
| Comp. ex.6 | | 0 | 5 0 0 0 | 9 6 . 2 | 4 . 3 | 0 . 4 7 |
| Ex. 6 | Triphenylethoxysilane | 0 . 0 8 | 9 3 0 0 | 9 7 . 6 | 4 . 5 | 0 . 4 8 |
| Comp. ex.7 | | 0 | 6 4 0 0 | 9 6 . 1 | 4 . 3 | 0 . 4 8 |

Table 2

| Name of Example or Comp. ex. | Organosilicon compound containing an alkoxy group | | Polymerization results | | | |
|---|---|---|---|---|---|---|
| | Name of compound | Used, mmol | Polymer yield | I I | M F R | B D |
| Ex. 7 | Phenyltrimethoxysilane | 0 . 1 5 | 8 9 0 0 | 9 7 . 4 | 1 . 8 | 0 . 4 6 |
| Comp.ex.8 | ——— | 0 | 5 8 0 0 | 9 5 . 9 | 1 . 6 | 0 . 4 5 |
| Ex. 8 | Ethyltriethoxysilane | 0 . 1 0 | 1 0 8 0 0 | 9 7 . 4 | 1 . 5 | 0 . 4 6 |
| Comp.ex.9 | ——— | 0 | 6 9 1 0 | 9 5 . 8 | 1 . 3 | 0 . 4 5 |
| Ex. 9 | Methyltrimethoxysilane | 0 . 0 8 | 8 8 2 0 | 9 7 . 3 | 1 . 8 | 0 . 4 5 |
| Comp.ex.10 | ——— | 0 | 6 0 0 0 | 9 6 . 1 | 1 . 8 | 0 . 4 5 |
| Ex. 10 | Dimethyldiethoxysilane | 0 . 0 8 | 1 0 7 3 0 | 9 7 . 4 | 3 . 7 | 0 . 4 6 |
| Comp.ex.11 | ——— | 0 | 7 4 8 0 | 9 6 . 2 | 3 . 6 | 0 . 4 5 |
| Ex. 11 | Phenyltrimethoxysilane | 0 . 1 5 | 9 8 5 0 | 9 7 . 5 | 4 . 1 | 0 . 4 6 |
| Comp.ex.12 | ——— | 0 | 5 8 7 0 | 9 6 . 3 | 3 . 8 | 0 . 4 6 |
| Ex. 12 | Ethyltriethoxysilane | 0 . 1 0 | 1 0 9 4 0 | 9 7 . 5 | 3 . 8 | 0 . 4 6 |
| Comp.ex.13 | ——— | 0 | 7 5 0 0 | 9 6 . 1 | 3 . 7 | 0 . 4 6 |

Table 3

| Name of Example or Comp. ex. | Organosilicon compound containing an alkoxy group* | | Polymerization results | | | |
|---|---|---|---|---|---|---|
| | Name of compound | Used, mmol | Polymer yield | II | MFR | BD |
| Ex. 13 | Allyltriethoxysilane | 0.10 | 9660 | 98.0 | 4.0 | 0.49 |
| Comp.ex.14 | — | 0 | 5100 | 96.5 | 3.8 | 0.48 |
| Ex. 14 | Vinyltrimethoxysilane | 0.10 | 9980 | 97.6 | 4.1 | 0.49 |
| Comp.ex.15 | — | 0 | 6230 | 96.2 | 4.1 | 0.49 |
| Ex. 15 | Trimethylphenoxysilane | 0.05 | 7060 | 97.1 | 3.8 | 0.46 |
| Comp.ex.16 | — | 0 | 4850 | 95.8 | 3.6 | 0.46 |
| Ex. 16 | Trimethylphenoxysilane | 0.05 | 8680 | 97.5 | 4.0 | 0.48 |
| Comp.ex.17 | — | 0 | 6090 | 96.2 | 4.0 | 0.48 |
| Ex. 17 | Triethoxychlorosilane | 0.10 | 9470 | 97.5 | 4.5 | 0.48 |
| Comp.ex.18 | — | 0 | 5100 | 96.4 | 4.5 | 0.48 |
| Ex. 18 | Triethoxychlorosiloxane | 0.05 | 9380 | — | 4.4 | 0.46 |
| Comp.ex.19 | — | 0 | 6900 | — | 4.1 | 0.46 |

Note:  * Compounds containing a phenoxy group in place of an alkoxy group are included.

## Claims

1. A process for polymerizing α-olefins in the presence of a catalyst characterized in that the catalyst comprises, in combination,
    (1) a titanium trichloride composition obtained by reducing $TiCl_4$ with a reaction product of an organoaluminum compound with an electron donor;
    (2) an organoaluminum compound; and

17

(3) an alkoxy group- or phenoxy group-containing organosilicon compound of the formula:

$$R^1{}_nSi(OR^2)_{4-n}$$

in which $R^1$ is a hydrogen or halogen atom or a $C_1$-$C_{20}$ hydrocarbon radical; $R^2$ is a $C_1$-$C_{20}$ hydrocarbon radical; and $\underline{n}$ is 0, 1, 2 or 3.

2. A process as claimed in claim 1 in which the titanium trichloride composition is a solid product (III) obtained by reacting TiCl$_4$ with a reaction product (I) of an organoaluminum compound with an electron donor to give a solid product (II) and further reacting this product (II) with an electron donor and an electron acceptor.

3. A process as claimed in claim 1 in which the titanium trichloride composition is a solid product (IV) obtained by reacting TiCl$_4$ with a reaction product (I) of an organoaluminum compound with an electron donor to give a solid product (II), subjecting this product (II) to polymerization treatment with an α-olefin and further reacting the thus treated product with an electron donor and an electron acceptor.

4. A process as claimed in any one of the preceding claims in which the catalyst is further reacted with an α-olefin and the resulting preactivated catalyst is used as polymerization catalyst.

5. A process as claimed in any one of the preceding claims in which the polymerization is carried out as a gas phase, slurry or bulk polymerization process.

**Patentansprüche**

1. Verfahren für die Polymerisation von α-Olefinen in Gegenwart eines Katalysators, dadurch gekennzeichnet, daß der Katalysator Folgendes in Verbindung einschließt:
(1) eine Titantrichloridzusammensetzung, die durch Reduktion von TiCl$_4$ mit einem Reaktionsprodukt einer aluminiumorganischen Verbindung mit einem Elektronendonator erhalten wird;
(2) eine aluminiumorganische Verbindung; und
(3) eine eine Alkoxygruppe oder Phenoxygruppe enthaltende siliziumorganische Verbindung der Formel;

$$R^1{}_nSi(OR^2)_{4-n}$$

worin sind; $R^1$ ein Wasserstoff- oder Halogenatom oder ein $C_1$-$C_{20}$ Kohlenwasserstoffradikal; $R^2$ ein $C_1$-$C_{20}$ Kohlenwasserstoffradikal; und $\underline{n}$ ist 0, 1, 2 oder 3.

2. Verfahren nach Anspruch 1, bei dem die Titantrichloridzusammensetzung ein festes Produkt (III) ist, das durch Reaktion von TiCl$_4$ mit einem Reaktionsprodukt (I) einer aluminiumorganischen Verbindung mit einem Elektronendonator, um ein festes Produkt (II) zu liefern, und einer weiteren Reaktion dieses Produktes (II) mit einem Elektronendonator und einem Elektronenakzeptor erhalten wird.

3. Verfahren nach Anspruch 1, bei dem die Titantrichloridzusammensetzung ein festes Produkt (IV) ist, das durch Reaktion von TiCl$_4$ mit einem Reaktionsprodukt (I) einer aluminiumorganischen Verbindung mit einem Elektronendonator, um ein festes Produkt (II) zu liefern, wobei dieses Produkt (II) einer Polymerisationsbehandlung mit einem α-Olefin unterworfen wird, und einer weiteren Reaktion des so behandelten Produktes mit einem Elektronendonator und einem Elektronenakzeptor erhalten wird.

4. Verfahren nach einem der vorangegangenen Ansprüchen, bei dem der Katalysator außerdem mit einem α-Olefin zur Reaktion gebracht wird und der resultierende voraktivierte Katalysator als Katalysator für die Polymerisation eingesetzt wird.

5. Verfahren nach einem der vorangegangenen Ansprüchen, bei dem die Polymerisation als Gasphasen-, Aufschlämmungs- oder Massepolymerisationsprozeß durchgeführt wird.

**Revendications**

1. Procédé pour polymériser des $\alpha$-oléfines en présence d'un catalyseur, caractérisé en ce que le catalyseur comprend, en combinaison,

   (1) une composition de trichlorure de titane obtenue par réduction de $TiCl_4$ à l'aide d'un produit réactionnel d'un composé d'organoaluminium avec un donneur d'électrons;

   (2) un composé d'organoaluminium; et

   (3) un composé d'organosilicium contenant un groupe alcoxy ou un groupe phénoxy, de formule :

   $$R^1_n Si (OR^2)_{4-n}$$

   dans laquelle $R^1$ représente un atome d'hydrogène ou un atome d'halogène ou encore un radical d'hydrocarbure en $C_1$-$C_{20}$; $R^2$ représente un radical d'hydrocarbure en $C_1$-$C_{20}$; et $\underline{n}$ est égal à 0, 1, 2 ou 3.

2. Procédé selon la revendication 1, dans lequel la composition de trichlorure de titane est un produit solide (III) que l'on obtient en faisant réagir du $TiCl_4$ avec un produit réactionnel (I) d'un composé d'organoaluminium avec un donneur d'électrons pour obtenir un produit solide (II) et en faisant réagir ultérieurement ce produit (II) avec un donneur d'électrons et un accepteur d'électrons.

3. Procédé selon la revendication 1, dans lequel la composition de trichlorure de titane est un produit solide (IV) que l'on obtient en faisant réagir du $TiCl_4$ avec un produit réactionnel (I) d'un composé d'organoaluminium avec un donneur d'électrons pour obtenir un produit solide (II), en soumettant ce produit (II) à un traitement de polymérisation avec une $\alpha$-oléfine et en faisant réagir ultérieurement le produit ainsi traité avec un donneur d'électrons et un accepteur d'électrons.

4. Procédé selon l'une quelconque des revendications précédentes, dans lequel on fait ultérieurement réagir le catalyseur avec une $\alpha$-oléfine et on utilise le catalyseur préactivé résultant comme catalyseur de polymérisation.

5. Procédé selon l'une quelconque des revendications précédentes, dans lequel on effectue la polymérisation sous forme d'un procédé de polymérisation en phase gazeuse, de boue ou en masse.